# EUROPEAN PATENT SPECIFICATION

(11) **EP 3 932 854 B1**
(45) Date of publication and mention of the grant of the patent: **13.12.2023**
(21) Application number: 20814583.9
(22) Date of filing: 30.04.2020
(51) Int. Cl.: B68G 7/052, B60N 2/58, A47C 31/02, B68G 7/12

(54) **SEAT**
SITZE
SIÈGE

(30) Priority: 31.05.2019 JP 2019102109
(43) Date of publication of application: 05.01.2022
(73) Proprietor: Delta Kogyo Co., Ltd., Aki-gun, Hiroshima 735-8501 (JP)
(72) Inventor: ARITA, Yuki, Aki-gun, Hiroshima 735-8501 (JP); ISODA, Kohei, Aki-gun, Hiroshima 735-8501 (JP); KATO, Mizuki, Aki-gun, Hiroshima 735-8501 (JP); ONJI, Atsushi, Aki-gun, Hiroshima 735-8501 (JP)
(74) Representative: Meissner Bolte Partnerschaft mbB
(86) International application number: PCT/JP2020/018244
(87) International publication number: WO 2020/241172

(56) References cited:
- WO-A1-2010/110042
- JP-A- H07 231 990
- JP-A- 2003 000 973
- JP-A- 2009 148 407
- JP-A- 2010 524 569
- JP-A- 2019 011 027

## Description

### Technical Field

The present invention relates to a seat including a pad and a skin.

### Background Art

For a seat such as an automobile seat, a seat structure in which a pad made of a foamed resin or the like is covered with a skin made of leather, vinyl leather or the like is adopted in a seat cushion that supports buttocks of a seated person or in a seat back that supports a back of a seated person.

For example, in the seat disclosed in Patent Literature 1, a skin has hanging portions at joints of a plurality of sheet-like materials, and the hanging portions are inserted into grooves of a pad and fastened to linear wires, the so-called "insert wires", provided inside the grooves. As a method of fastening the hanging portion, the hanging portion is fastened to the insert wire by hooking the hanging portion to the insert wire with C-shaped rings (C-rings) by means of an attachment tool called "hogringer" or the like.

However, according to the seat structure disclosed in Patent Literature 1, work is necessary for fastening the hanging portion of the skin to the inside of the groove of the pad by using an attachment tool such as hogringer. Since such an attachment tool as hogringer is heavy, a heavy burden is imposed on an operator who performs the skin attachment work.

Further, in the seat structure disclosed in Patent Literature 1, when the hanging portion is fastened by means of the C-rings, the skin is locally (at a pinpoint) pulled by the C-rings, so that wrinkles (e.g. radially extending wrinkles) are likely to appear, making it difficult to improve appearance quality of the seat.
Patent Literature 2 discloses a guide rail which is provided on the bottom part side of a recessed groove for the retracting part of a pad material. The retracting member is formed of a mounting part fixed to the covering material and a rail part. The guide rail is formed of the body portion 1a of a roughly U-shaped cross section and engaging portions of roughly L-shaped cross sections extended to the sides opposite to each other from the both ends of the U-shaped body portion. The rail portion of the retracting member is formed in a roughly reverse T-shaped cross section. The rail portion of the retracting member is inserted from the end part of the guide rail and fitted in the guide rail. Patent Literature 3 discloses a vehicle seat with a constitution that a seat cover is laid over a cushion pad having a tucking slit-like recessed part and part of the seat cover is tucked into the recessed part. A spring type clip is provided under the slit-like recessed part to clip a tucking margin. Part of the seat cover is pulled in toward the rear side to form the pleat-like tucking margin and the tucking margin is directly held by the spring type clip.

### Citation List

### Patent Literature

Patent Literature 1: JP 2018 - 052 498 A
Patent Literature 2: JP 2003 - 000 973 A
Patent Literature 3: JP H07 - 231 990 A

### Summary of Invention

The present invention has been made in view of the above circumstances, and an object thereof is to provide a seat enabling reduction of a burden of skin assembling work and improvement of appearance quality of the seat.

In order to solve the above problems, a seat according to the present invention includes: a pad having at least one groove formed in an opposing surface facing a seated person; a skin that has at least one hanging portion extending along the groove and hung inside the groove and covers the opposing surface of the pad; at least one linear member extending along a longitudinal direction of the hanging portion and provided at an end edge of the hanging portion; and at least one elastically deformable tubular member provided inside the groove of the pad so as to extend along the groove, wherein a slit is formed on an outer peripheral surface of the tubular member, the slit extending in a longitudinal direction of the tubular member, having a width narrower than an outer diameter of the linear member, and enabling the width to be expanded by elastic deformation of the tubular member, and wherein the linear member is inserted from the slit on the outer peripheral surface of the tubular member, and the linear member provided at the hanging portion of the skin is restrained inside the groove of the pad in a state where the hanging portion is inserted in the slit of the tubular member.. Preferred embodiments are provided by the dependent claims 2 to 8.

### Brief Description of Drawings

FIG. 1 is an exploded perspective view illustrating an overall configuration of a seat cushion according to an embodiment of a seat of the present invention;
FIG. 2 is an explanatory cross-sectional view illustrating a state in which a skin shown in FIG. 1 is attached to a pad;
FIG. 3 is an enlarged cross-sectional view of a part A shown in FIG. 2;
FIG. 4 is a perspective view of a tubular member shown in FIG. 3;
FIG. 5 is an enlarged perspective view illustrating a portion where a linear member is provided at an end edge of a hanging portion of the skin shown in FIG. 2;
FIG. 6 is an enlarged perspective view illustrating a portion of the tubular member provided in a groove of the pad shown in FIG. 2;
FIG. 7 is an explanatory cross-sectional view illustrating a state in which the linear member is inserted into the tubular member in a cross section taken along line VII-VII shown in FIG. 6;
FIG. 8 is a plan view illustrating a state in which the tubular members are arranged in the grooves arranged on four sides of a rectangular shape formed in an upper surface of the pad shown in FIG. 1;
FIG. 9 is a front view of a roller pressing tool used when the linear member shown in FIG. 7 is pushed;
FIG. 10 is an explanatory view illustrating a moving direction of the roller pressing tool when the linear member is pushed into a slit of the tubular member shown in FIG. 7 from above;
FIG. 11 is an explanatory perspective view illustrating a method of inserting the linear member from an insertion port on a front side of the tubular member as another method of attaching the linear member in the seat cushion shown in FIG. 1;
FIG. 12 is an explanatory view illustrating a configuration in which the tubular members are provided in grooves in a front-rear direction of the pad and a male-side member of a hook-and-loop fasteners are provided in grooves in a lateral direction as a preferable configuration for the method, shown in FIG. 11, of inserting the linear member from the insertion port on the front side of the tubular member;
FIG. 13 is an enlarged perspective view illustrating a configuration in which a female-side member adhering to the male-side member shown in FIG. 12 is provided in the hanging portion of the skin; and
FIG. 14 is a cross-sectional view of a linear member having a tapered protruding portion and a pair of engaging protrusions as a modification of the seat of the present invention.

### Description of Embodiments

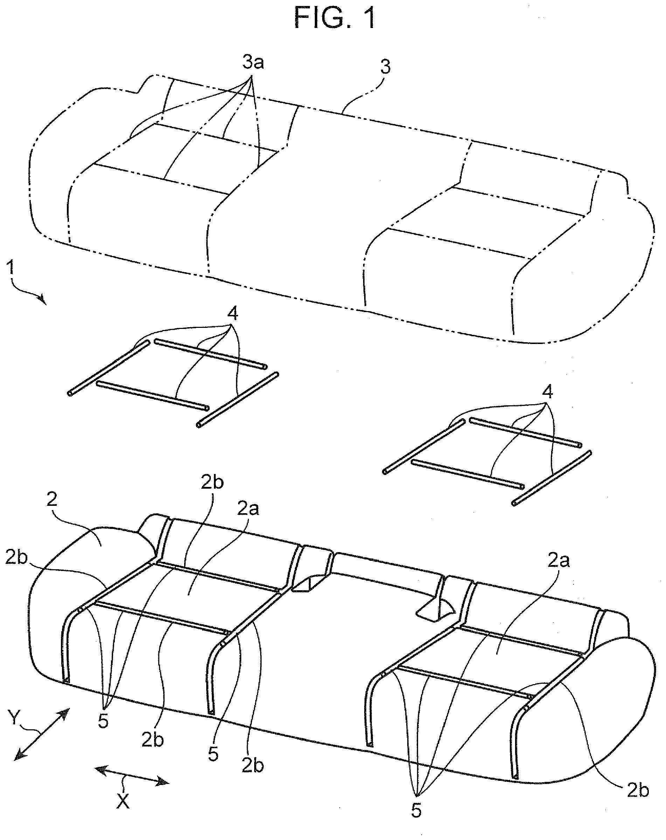

Hereinafter, a preferred embodiment of the present invention will be described in detail with reference to the accompanying drawings. FIG. 1 illustrates a structure of a seat cushion 1 that supports buttocks of a seated person in an automobile seat as an example of an embodiment of a seat according to the present invention. The seat cushion 1 illustrated in FIG. 1 has a structure in which three rows of seating portions are arranged in a lateral direction of a rear seat of an automobile.

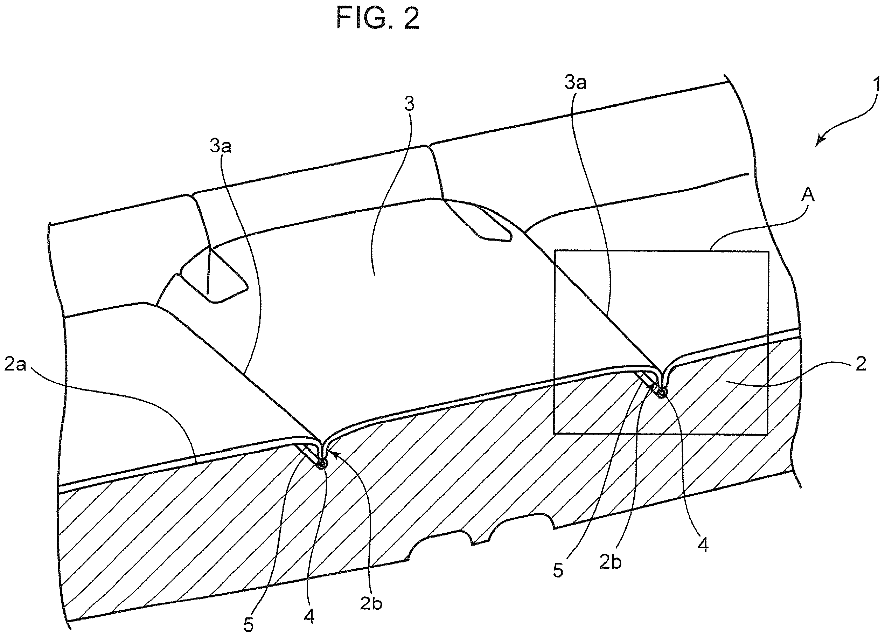

As illustrated in FIG. 1 to FIG. 6, the seat cushion 1 includes a pad 2 and a skin 3 covering the pad 2, and further includes linear members 4 and tubular members 5 provided for attaching the skin 3 to the pad 2.

The linear member 4 are attached to hanging portions 3a of the skin 3 respectively, while the tubular members 5 are provided inside grooves 2b of the pad 2 respectively (specifically, a bottom portion of the groove 2b). By inserting the linear member 4 into the tubular member 5, the skin 3 can be assembled.

Next, each component of the seat cushion 1 will be described in more detail.

The pad 2 has an upper surface 2a that is an opposing surface facing a seated person (in particular, a vicinity of buttocks). The pad 2 of the present embodiment has two upper surfaces 2a such that three rows of seating portions are formed in a lateral direction X of the seat cushion 1.

On each of the upper surfaces 2a, the groove 2b is formed in order for the hanging portion 3a of the skin 3 and the linear member 4 to be inserted. The groove 2b extends so as to form four sides of a rectangular shape in the upper surface 2a. In addition, the groove 2b of the present embodiment also extends in a front-rear direction Y of the seat cushion 1 from the corner portions of the four sides of the rectangular shape.

The pad 2 is made of a material having elasticity and a certain degree of shape retainability. The pad 2 is manufactured, for example, by integrated foam molding of a low-density and shape-retaining bead foam and an elastic polyurethane resin. In a case of integrated foam molding, the pad 2 is lightweight.

The skin 3 covers the upper surface 2a of the pad 2, and is configured by joining end portions of a plurality of sheet-like materials made of leather, vinyl leather, or the like. The skin 3 has the hanging portion 3a formed at a joint of the sheet-like material. The hanging portion 3a protrudes downward with respect to a surface of the skin 3. The hanging portion 3a extends along the groove 2b of the pad 2 and is hung inside the groove 2b. In the present embodiment, the hanging portion 3a extends forming four sides of a rectangular shape so as to correspond to the arrangement of the grooves 2b.

The linear member 4 extends along a longitudinal direction of the hanging portion 3a and is provided at an end edge 3b located at a lower end of the hanging portion 3a. The linear members 4 of the present embodiment are individually provided with the hanging portions 3a respectively hung in the grooves 2b on the four sides.

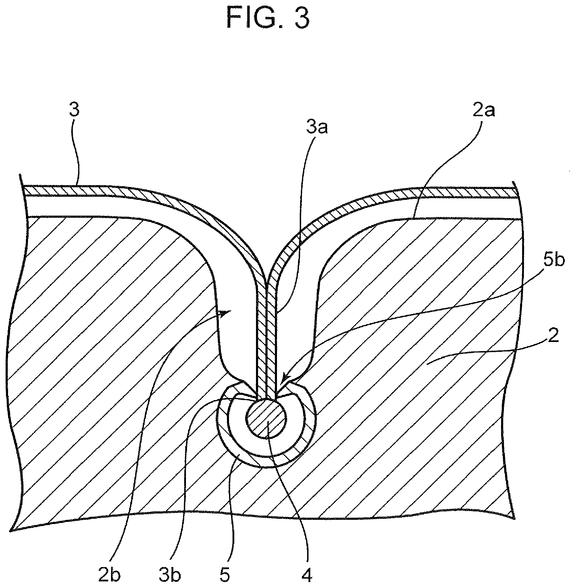

As a method of attaching the linear member 4 to the hanging portion 3a, various methods can be adopted. For example, in a case where the linear member 4 is made of a synthetic resin such as polypropylene (PP), the linear member 4 is fused to the end edge 3b (see FIG. 3) extending downward from a back side of the hanging portion 3a of the skin 3. On the other hand, in a case where the linear member 4 is a steel wire, the linear member 4 can be attached by providing a tubular bag at the end edge 3b of the hanging portion 3a of the skin 3 along the hanging portion 3a and holding the steel wire in the bag. In addition, in order to facilitate insertion of the linear member 4 into the tubular member 5, it is desirable that the linear member 4 is hard to bend (has a certain degree of bending rigidity).

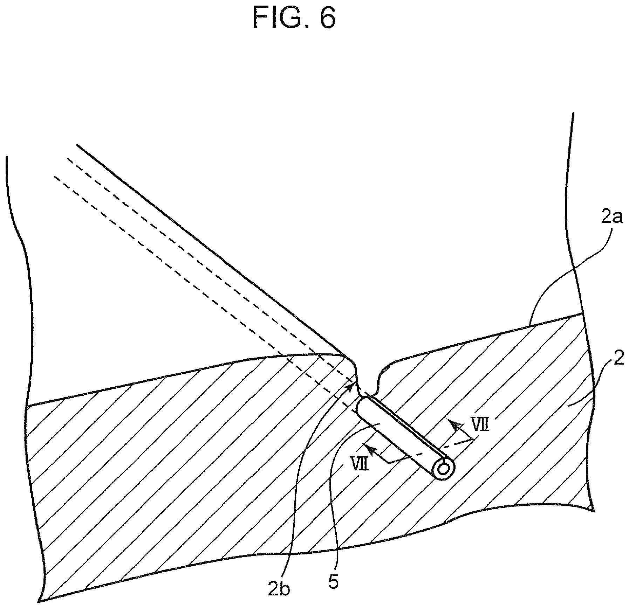

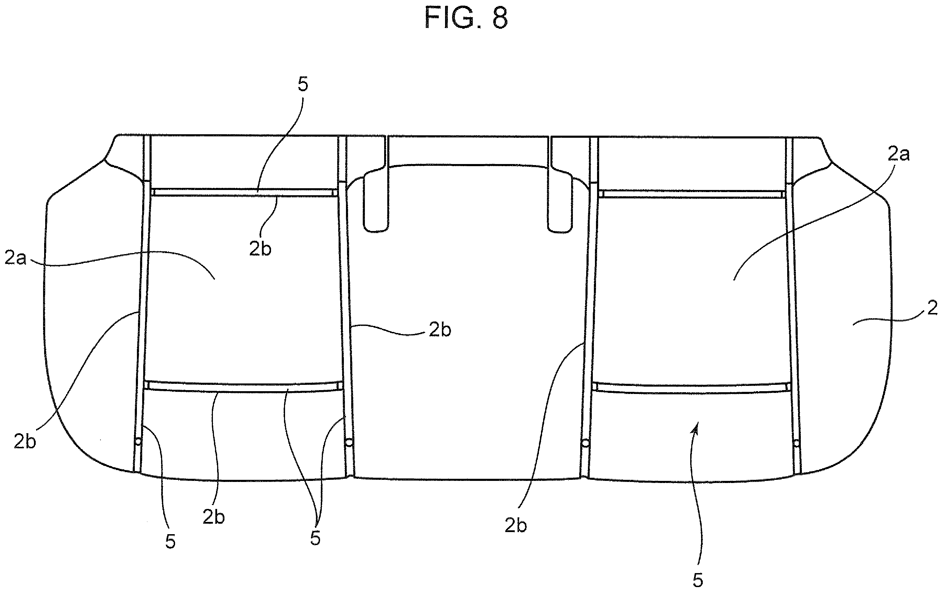

The tubular member 5 is an elastically deformable tubular body, and is provided at the bottom portion of the groove 2b in the pad 2 so as to extend along the groove 2b as illustrated in FIG. 6 and FIG. 8. The tubular member 5 may be provided inside the groove 2b. Therefore, in addition to the configuration in which the tubular member 5 is provided at the bottom portion of the groove 2b, the tubular member 5 may be supported by sandwiching the tubular member 5 by side walls on both sides of the groove 2b.

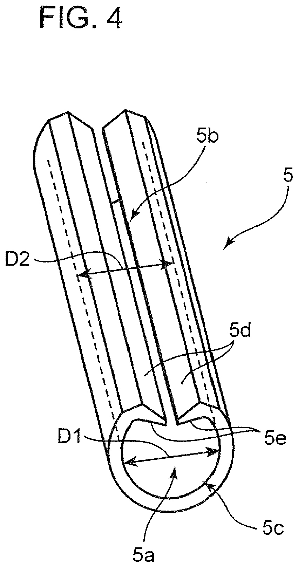

A slit 5b (see FIG. 3 and FIG.4) opening upward is formed on an outer peripheral surface of the tubular member 5. In other words, in the present embodiment, the slit 5b faces upward or obliquely upward so as to face the inside of the groove 2b, specifically, to face an opening of the groove 2b. The slit 5b extends in a longitudinal direction of the tubular member 5, penetrates to an inner space 5a of the tubular member 5, and has a width δ1 narrower than an outer diameter D3 of the linear member 4. The width δ1 of the slit 5b can be enlarged by elastic deformation (specifically, elastic deformation in a direction of widening the slit 5b by pressing of the linear member 4 against the slit 5b) of the tubular member 5. An insertion port 5c is formed at a bottom end of the tubular member 5. In the tubular member 5 provided along the groove 2b extending in the front-rear direction Y of the seat cushion 1, the insertion port 5c of the tubular member 5 opens to a front side of the seat cushion 1.

The tubular member 5 is made of, for example, a synthetic resin such as polypropylene. In addition, it is desirable that the tubular member 5 is elastically deformed when the linear member 4 is inserted so that the linear member 4 is easily inserted into the tubular member 5, and on the other hand, it is desirable that the linear member 4 after being inserted into the tubular member 5 is hardly removed from the tubular member 5.

The tubular member 5 may be fixed inside the pad 2 made of a foaming member by installing a magnet in a mold for molding the pad 2 made of a foaming member, positioning the tubular member 5 filled with iron wire rods or the like inside the mold by using magnetic force of the magnet, and then foam molding the pad 2 made of a foaming member inside the mold. At this time, the tubular member 5 may be arranged inside the groove 2b of the pad 2 (specifically, at the bottom portion of the groove 2b) and fixed inside the pad 2 such that the slit 5b of the tubular member 5 communicates with the inside of the groove 2b. After the pad 2 is demolded, the inner space 5a can be ensured by pulling out the iron wire rods from the tubular member 5.

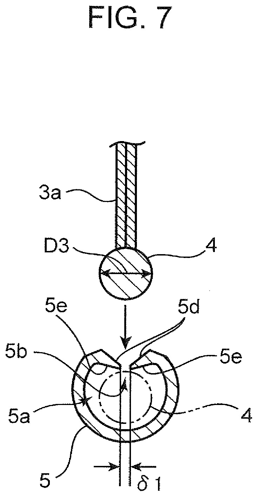

In the present embodiment, as further shown in FIG. 4 and FIG. 7, the tubular member 5 has, on the outer peripheral surface of the tubular member 5, an outer inclined surface 5d inclined toward a radially inner side (the lower side in FIG. 4 and FIG. 7) of the tubular member 5 as approaching an edge of the slit 5b from a circumferential direction of the tubular member 5.

As shown in FIG. 4 and FIG. 7, the tubular member 5 has, on the inner peripheral surface of the tubular member 5, an inner inclined surface 5e inclined toward the radially inner side of the tubular member 5 as approaching the edge of the slit 5b from the circumferential direction of the tubular member 5.

As illustrated in FIG. 4, an inner diameter D1 of the insertion port 5c is set to be wider than an inner diameter D2 of the other portion of the tubular member 5.

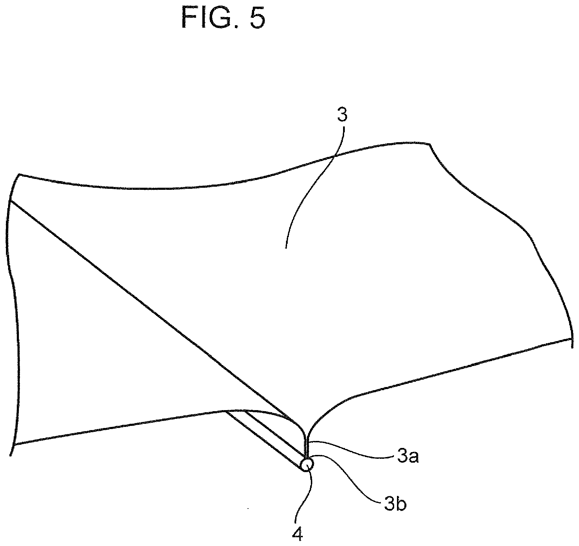

In the seat cushion 1 configured as described above, the tubular member 5 has a configuration in which the skin 3 is fastened by inserting the linear member 4 into the tubular member 5 from one of the slit 5b and the insertion port 5c of the tubular member 5. Therefore, the skin 3 can be assembled to the pad 2 by the following two assembling methods.
1. Method of assembling the skin 3 by inserting the linear member 4 through the slit 5b not forming part of the invention As illustrated in FIG. 5 and FIG. 6, firstly, the hanging portion 3a of the skin 3 and the linear member 4 provided at the end edge 3b of the hanging portion are inserted into the groove 2b formed in the upper surface 2a of the pad 2.

Next, as illustrated in FIG. 3 and FIG. 7, the linear member 4 inserted in the groove 2b is pressed downward and inserted into the slit 5b of the tubular member 5 provided at the bottom portion of the groove 2b.

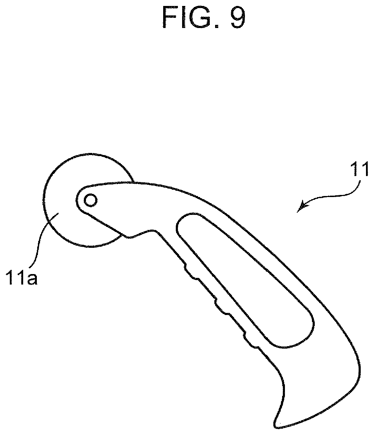

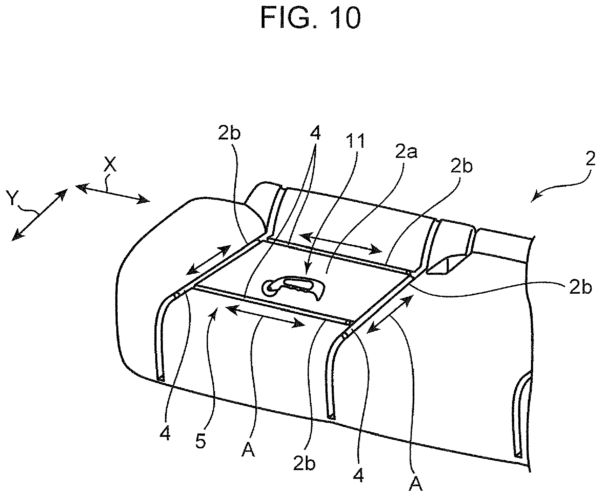

As a method of pressing the linear member 4 downward, for example, an operator uses a roller pressing tool 11 having a disk-shaped pressing roller 11a illustrated in FIG. 9 and FIG. 10 to downwardly press the linear member 4 inserted in the groove 2b by the roller pressing tool 11 while reciprocating the roller pressing tool 11 along the groove 2b in a moving direction A as illustrated in FIG. 10, so that the linear member 4 can be reliably inserted into the slit 5b of the tubular member 5 over the entire length.

As a result, the hanging portion 3a of the skin 3 is held inside the groove 2b of the pad 2 by the connection between the linear member 4 and the tubular member 5, and the assembling work of the skin 3 to the pad 2 is completed.

2. Method of assembling the skin 3 by inserting the linear member 4 from the insertion port 5c not froming part of the invention.

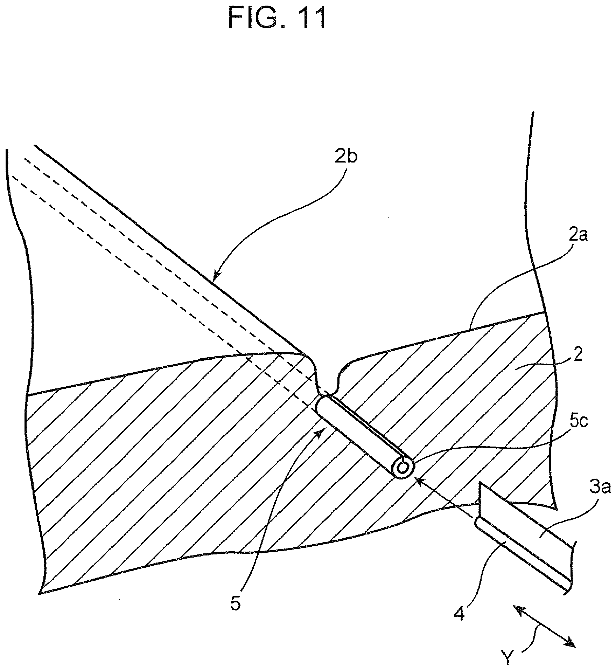

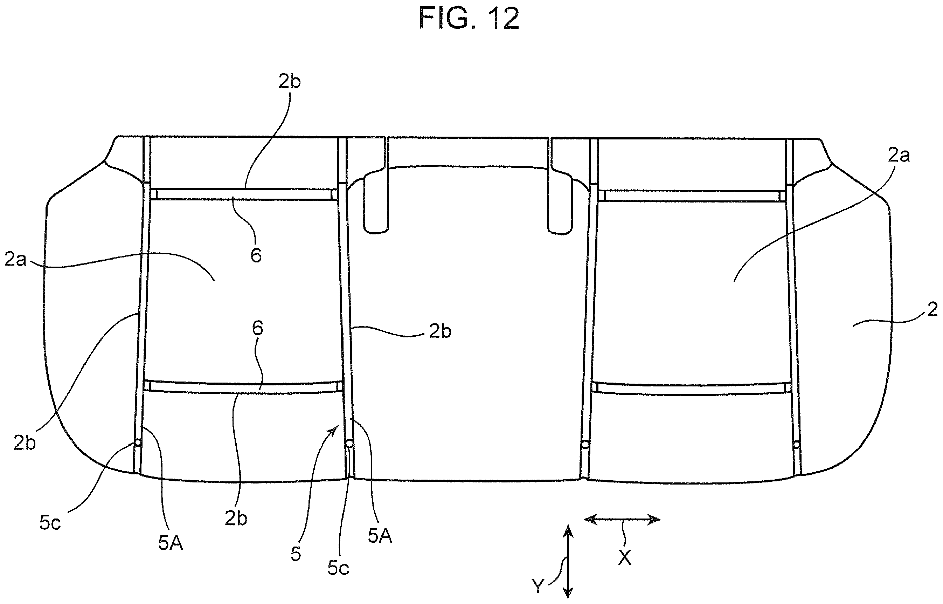

As illustrated in FIG. 11 and FIG. 12, the hanging portion 3a and the linear member 4 extending in the front-rear direction Y of the skin 3 are inserted into the groove 2b extending in the front-rear direction Y of the pad 2 from a front side of the pad 2.

At this time, as illustrated in FIG. 4, FIG. 11 and FIG. 12, in the groove 2b extending in the front-rear direction Y, the linear member 4 is inserted into the insertion port 5c which is opened on a front side of the tubular member 5 extending in the front-rear direction Y and which is provided at the bottom portion of the groove 2b.

As a result, in the groove 2b extending in the front-rear direction Y of the pad 2, the hanging portion 3a of the skin 3 is held inside the groove 2b of the pad 2 by the connection between the linear member 4 and the tubular member 5.

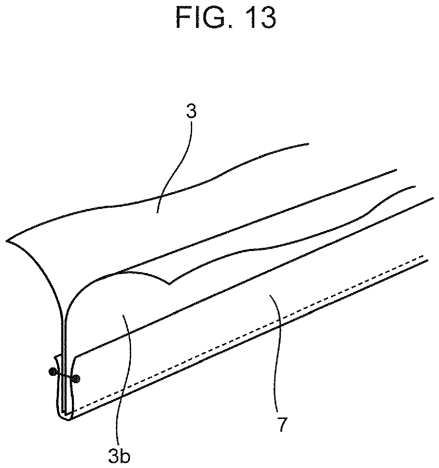

As for the fastening of the hanging portion 3a of the skin 3 in the groove 2b extending in the lateral direction X of the pad 2 shown in FIG. 12, the linear member 4 may be inserted from the slit 5b of the tubular member 5 as in the above-described assembling method 1. However, as a simpler method, as shown in FIG. 12 and FIG. 13, instead of the tubular member 5, a male-side member 6 (sheet-like member having a large number of small hooks) of a hook-and-loop fastener may be continuously provided on an inner wall of the groove 2b in a longitudinal direction of the groove 2b extending in the lateral direction X, while instead of the linear member 4, a female-side member 7 (a sheet-like member having a large number of loop portions engageable with the hooks) of the hook-and-loop fastener may be continuously provided in the hanging portion 3a of the skin 3 in the longitudinal direction of the hanging portion 3a, the female-side member being adherable to the male-side member 6. The male-side member 6 and the female-side member 7 of the hook-and-loop fastener may be intermittently provided in the longitudinal direction of the groove 2b and the hanging portion 3a. By engaging the large number of hooks of the male-side member 6 with the large number of loop portions of the female-side member 7, it is possible to connect (or adhere) the male-side member 6 and the female-side member 7.

The operator manually connects (or adheres) the male-side member 6 and the female-side member 7 of the hook-and-loop fastener, whereby even in the groove 2b extending in the lateral direction X, the hanging portion 3a of the skin 3 is easily held inside the groove 2b of the pad 2. In this manner, the assembling work of the skin 3 to the pad 2 is completed.

It should be noted that the male-side member 6 and the female-side member 7 of the hook-and-loop fastener can be arranged in the opposite manner. However, in a case where the male-side member 6 having the above hooks is provided in the hanging portion 3a of the skin 3, there is a possibility that the hook is caught by various parts (e.g., clothes, gloves, and the like of an operator) at the time of assembling the skin 3, resulting in hindering the work. Therefore, it is preferable to provide the female-side member 7 having the above loop portions in the hanging portion 3a of the skin 3 so as not to hinder such work.

### (Features of Present Embodiment)

(1) The seat cushion 1 of the present embodiment includes the linear members 4 extending along the longitudinal direction of the hanging portions 3a and provided at the end edge 3b of the hanging portion 3a, and the elastically deformable tubular members 5 provided inside the grooves 2b of the pad 2 (specifically, the bottom portion of the groove 2b) in a manner to extend along the groove 2b. On the outer peripheral surface of the tubular member 5, the slit 5b is formed which extends in the longitudinal direction of the tubular member 5, has the width δ1 narrower than the outer diameter D3 (see FIG. 7) of the linear member 4, and enables the width δ1 to be expanded by elastic deformation of the tubular member 5. Thus, by inserting the linear member 4 from the slit 5b on the outer peripheral surface of the tubular member 5, the linear member 4 provided at the hanging portion 3a of the skin 3 can be restrained inside the groove 2b of the pad 2 in a state where the hanging portion 3a is inserted in the slit 5b of the tubular member 5. Therefore, it is possible to perform the assembling work of the skin 3 to the pad 2 without using a heavy tool such as hogringer, and possible to reduce a burden on an operator.
   Furthermore, the linear member 4 extending along the longitudinal direction of the hanging portion 3a is restrained inside the groove 2b, whereby a force for drawing the hanging portion 3a into the groove 2b through the linear member 4 can be applied over the entire longitudinal direction of the hanging portion 3a. Therefore, local wrinkles are less likely to appear in the skin 3, so that the appearance quality of the seat is improved.
(2) In the seat cushion 1 of the present embodiment, the insertion port 5c into which the linear member 4 can be inserted is formed at the end of the tubular member 5. Therefore, by inserting the linear member 4 from the insertion port 5c at the end of the tubular member 5, it is possible to restrain the linear member 4 inside the groove 2b of the pad 2, the linear member being provided at the hanging portion 3a of the skin 3, in a state where the hanging portion 3a is inserted in the slit 5b of the tubular member 5. Therefore, it is possible to perform the assembling work of the skin 3 to the pad 2 without using a heavy tool such as hogringer, and possible to reduce a burden on an operator. Also in this case, the linear member 4 extending along the longitudinal direction of the hanging portion 3a is restrained inside the groove 2b, whereby a force for drawing the hanging portion 3a into the groove 2b through the linear member 4 can be applied over the entire longitudinal direction of the hanging portion 3a. Therefore, local wrinkles are less likely to appear in the skin 3, so that the appearance quality of the seat is improved.
   Although in the present embodiment, the insertion port 5c into which the linear member 4 can be inserted is formed at the end of the tubular member 5, the present invention is not limited thereto, and the insertion port 5c may be omitted. Even in this case, the linear member 4 can be inserted from the slit 5b of the tubular member 5.
(3) In the seat cushion 1 of the present embodiment, the inner diameter D1 of the insertion port 5c is set to be larger than the inner diameter D2 of the other portion of the tubular member 5. This configuration enables the work of inserting the linear member 4 into the slit 5b to be easily performed.
(4) In the seat cushion 1 of the present embodiment, the tubular member 5 has, on the outer peripheral surface of the tubular member 5, the outer inclined surface 5d inclined toward the radially inner side of the tubular member 5 as approaching the edge of the slit 5b from the circumferential direction of the tubular member 5.
   In this configuration, when the linear member 4 is inserted into the tubular member 5 through the slit 5b, the linear member 4 abuts on the outer inclined surface 5d of the outer peripheral surface of the tubular member 5 and is guided in the direction toward the slit 5b by the inclined surface, so that the inserting work of the linear member 4 into the slit 5b can be easily performed.
(5) In the seat cushion 1 of the present embodiment, the tubular member 5 has, on the inner peripheral surface of the tubular member 5, the inner inclined surface 5e inclined toward the radially inner side of the tubular member 5 as approaching the edge of the slit 5b from the circumferential direction of the tubular member 5.
   In this configuration, even when a tensile force toward the outside of the slit 5b of the tubular member 5 acts on the hanging portion 3a of the skin in a state where the linear member 4 is inserted in the tubular member 5, the linear member 4 pushes the inner inclined surface 5e of the tubular member 5 radially outward, so that the inner inclined surface 5e moves in a direction of narrowing the width δ1 of the slit 5b. Accordingly, it is possible to prevent the linear member 4 from being detached from the tubular member 5 through the slit 5b. As a result, the inner inclined surface 5e can function as a check valve so that the skin 3 does not come off the pad 2.
(6) The seat cushion 1 of the present embodiment may further include, in the configuration in which the plurality of hanging portions 3a of the skin 3 are respectively hung in the plurality of grooves 2b of the pad 2, a hook-and-loop fastener (specifically, a hook-and-loop fastener including the male-side member 6 and the female-side member 7 in FIG. 12 and FIG. 13) that detachably holds some hanging portions 3a of the plurality of hanging portions 3a inside the groove 2b.

In a case where the plurality of grooves 2b are formed in the pad as described above, it may be difficult to attach, to the tubular member 5, the linear member 4 attached to the hanging portion 3a depending on the position of the groove 2b and the extending direction of the groove 2b (e.g., in the lateral direction X of the seat cushion 1). In such a case, by using the hook-and-loop fastener including the male-side member 6 and the female-side member 7 as described above, the hanging portion 3a can be detachably and easily held inside the groove 2b.

Therefore, by using the hook-and-loop fastener together with the linear member 4 and the tubular member 5, the skin 3 can be manually assembled without using a tool such as the roller pressing tool 11.

Specifically, as illustrated in FIG. 4 and FIG. 11 to FIG. 13, as for the groove 2b extending in the front-rear direction Y, the hanging portion 3a can be held inside the groove 2b by manually inserting the linear member 4 attached to the hanging portion 3a into the insertion port 5c opened on the front side of the tubular member 5 provided at the bottom portion of the groove 2b. On the other hand, as for the groove 2b extending in the lateral direction X, the hanging portion 3a can be held inside the groove 2b by manually connecting the hook-and-loop fastener (the male-side member 6 and the female-side member 7). As a result, the assembling work of the skin 3 can be performed manually with ease without using a tool such as the roller pressing tool 11 for the groove 2b in either of the front-rear direction Y and the lateral direction X.

### (Modification)

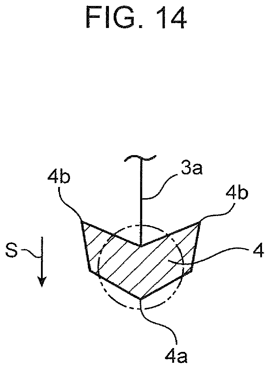

(A) Although in the seat cushion 1 of the present embodiment, the linear member 4 is illustrated as a linear member having a round cross section as an example, the present invention is not limited thereto. As a modification of the present invention, as illustrated in FIG. 14, the linear member 4 may have a tapered protruding portion 4a at a portion of the outer peripheral surface of the linear member 4, the portion being separated from the hanging portion 3a. Specifically, the protruding portion 4a illustrated in FIG. 14 is arranged in a portion (a lower part in FIG. 14) opposite to the hanging portion 3a, and protrudes in an insertion direction S (a downward direction in FIG. 14) of the linear member 4, that is, in a direction away from the hanging portion 3a. In this configuration, by moving the linear member 4 in the insertion direction S and pressing the tapered protruding portion 4a of the linear member 4 against the slit 5b of the tubular member 5, the tubular member 5 is elastically deformed to enable the slit 5b to be easily widened. As a result, the work of inserting the linear member 4 into the slit 5b can be easily performed.
(B) As another modification of the present invention, as illustrated in FIG. 14, the linear member 4 may have, on the outer peripheral surface of the linear member 4, an engaging protrusion 4b engageable with the inner peripheral surface of the tubular member 5. The engaging protrusion 4b protrudes in a direction opposite to the insertion direction S of the linear member 4, and functions as the so-called "barb". Specifically, the pair of engaging protrusions 4b illustrated in FIG. 14 protrudes, at a place separated from the hanging portion 3a, in directions which are away from each other on both sides and which are opposite to the insertion direction S of the linear member 4 as described above. In this configuration, even when a tensile force toward the outside of the slit 5b of the tubular member 5 acts on the hanging portion 3a of the skin 3, the engaging protrusion 4b of the linear member 4 is engaged with the inner peripheral surface of the tubular member 5, so that it is possible to prevent the linear member 4 from being detached from the tubular member 5 through the slit 5b. As a result, the skin 3 is prevented from being detached from the pad 2.
(C) Although in the above embodiment, a seat cushion of an automobile seat has been described as an example of the seat of the present invention, the present invention is not limited thereto, and the seat of the present invention can be widely applied as long as it is a seat having a pad and a skin. As a modification of the present invention, a seat back that supports a back of a seated person in an automobile seat may be used. In addition to an automobile seat, the seat in the present invention includes a seat installed in a vehicle for an airplane, a railway, or the like, and a sofa, a leather chair, or the like installed in a building or a house.

### <Summary of Embodiments>

The above embodiments are summarized as follows.

A seat according to the present embodiment comprises the features of claim 1.

The seat of the present embodiment includes the linear member extending along the longitudinal direction of the hanging portion and provided at the end edge of the hanging portion, and the elastically deformable tubular member provided inside the groove of the pad so as to extend along the groove. On the outer peripheral surface of the tubular member, the slit is formed which extends in the longitudinal direction of the tubular member, has the width narrower than the outer diameter of the linear member, and enables the width to be expanded by elastic deformation of the tubular member. Thus, by inserting the linear member from the slit on the outer peripheral surface of the tubular member, the linear member provided at the hanging portion of the skin can be restrained inside the groove of the pad in a state where the hanging portion is inserted in the slit of the tubular member. Therefore, it is possible to perform an assembling work of the skin to the pad without using a heavy tool such as hogringer, and possible to reduce a burden on an operator.

Furthermore, the linear member extending along the longitudinal direction of the hanging portion is restrained inside the groove, whereby a force for drawing the hanging portion into the groove through the linear member can be applied over the entire longitudinal direction of the hanging portion. Therefore, local wrinkles are less likely to appear in the skin, so that the appearance quality of the seat is improved.

In the seat described above, an insertion port into which the linear member is insertable may be formed at an end of the tubular member.

In such a configuration, by inserting the linear member from the insertion port at the end of the tubular member, it is possible to restrain the linear member inside the groove of the pad, the linear member being provided at the hanging portion of the skin, in a state where the hanging portion is inserted in the slit of the tubular member. Therefore, it is possible to perform an assembling work of the skin to the pad without using a heavy tool such as hogringer, and possible to reduce a burden on an operator. Also in this case, the linear member extending along the longitudinal direction of the hanging portion is restrained inside the groove, whereby a force for drawing the hanging portion into the groove through the linear member can be applied over the entire longitudinal direction of the hanging portion. Therefore, local wrinkles are less likely to appear in the skin, so that the appearance quality of the seat is improved.

In the above seat, an inner diameter of the insertion port is preferably set to be wider than an inner diameter of the other portion of the tubular member.

Such a configuration enables the inserting work of the linear member into the slit to be easily performed.

In the seat described above, the tubular member preferably has an outer inclined surface on an outer peripheral surface of the tubular member, the outer inclined surface being inclined toward a radially inner side of the tubular member as approaching an edge of the slit from a circumferential direction of the tubular member.

In such a configuration, when the linear member is inserted into the tubular member through the slit, the linear member abuts on the outer inclined surface of the outer peripheral surface of the tubular member and is guided in the direction toward the slit by the inclined surface, so that the inserting work of the linear member into the slit can be easily performed.

In the seat described above, the tubular member preferably has, an inner inclined surface on an inner peripheral surface of the tubular member, the inner inclined surface being inclined toward a radially inner side of the tubular member as approaching an edge of the slit from a circumferential direction of the tubular member.

In such a configuration, even when a tensile force toward the outside of the slit of the tubular member acts on the hanging portion of the skin in a state where the linear member is inserted in the tubular member, the linear member pushes the inner inclined surface of the tubular member radially outward, so that the inner inclined surface moves in a direction of narrowing the width of the slit. Accordingly, it is possible to prevent the linear member from being detached from the tubular member through the slit. As a result, the inner inclined surface can function as a check valve so that the skin does not come off the pad.

In the seat described above, the linear member preferably has a tapered protruding portion at a portion of an outer peripheral surface of the linear member, the portion being separated from the hanging portion.

Such a configuration enables the inserting work of the linear member into the slit to be easily performed.

In the seat described above, the linear member preferably has an engaging protrusion on an outer peripheral surface of the linear member, the engaging protrusion being engageable with the inner peripheral surface of the tubular member.

In such a configuration, even when a tensile force toward the outside of the slit of the tubular member acts on the hanging portion of the skin, the engaging protrusion of the linear member is engaged with the inner peripheral surface of the tubular member, so that it is possible to prevent the linear member from being detached from the tubular member through the slit. As a result, the skin is prevented from being detached from the pad.

The seat described above may further include, in a configuration in which a plurality of the hanging portions are respectively hung in a plurality of the grooves, a hook-and-loop fastener that detachably holds some of the plurality of hanging portions in the grooves.

In a case where the plurality of grooves are formed in the pad as described above, it may be difficult to attach, to the tubular member, the linear member attached to the hanging portion depending on the position of the groove and the extending direction of the groove. In such a case, by using the hook-and-loop fastener as described above, the hanging portion can be manually held inside the hook and loop fastener with ease.

## Claims

1. A seat (1) comprising:
a pad (2) having at least one groove (2b) formed in an opposing surface facing a seated person;
a skin (3) that has at least one hanging portion (3a) extending along the groove (2b) and hung inside the groove (2b) and covers the opposing surface of the pad (2);
at least one linear member (4) extending along a longitudinal direction of the hanging portion (3a) and provided at an end edge (3b) of the hanging portion (3a); and
at least one elastically deformable tubular member (5) provided inside the groove (2b) of the pad (2) so as to extend along the groove (2b),
wherein a slit (5b) is formed on an outer peripheral surface (5d) of the tubular member (5), the slit (5b) extending in a longitudinal direction of the tubular member (5), having a width narrower than an outer diameter of the linear member (4),
**characterized in that**
the slit (5b) enables the width to be expanded by elastic deformation of the tubular member (5), and
the linear member (4) is inserted from the slit (5b) on the outer peripheral surface (5d) of the tubular member (5), and the linear member (4) provided at the hanging portion (3a) of the skin (3) is restrained inside the groove (2b) of the pad (2) in a state where the hanging portion (3a) is inserted in the slit (5b) of the tubular member (5).

2. The seat (1) according to claim 1, wherein an insertion port (5c) into which the linear member (4) is insertable is formed at an end of the tubular member (5).

3. The seat (1) according to claim 2, wherein an inner diameter of the insertion port (5c) is set to be wider than an inner diameter of the other portion of the tubular member (5).

4. The seat (1) according to any one of claims 1 to 3, wherein the tubular member (5) has an outer inclined surface on the outer peripheral surface (5d) of the tubular member (5), the outer inclined surface being inclined toward a radially inner side of the tubular member (5) as approaching an edge of the slit (5b) from a circumferential direction of the tubular member.

5. The seat (1) according to any one of claims 1 to 4, wherein the tubular member (5) has an inner inclined surface (5e) on an inner peripheral surface of the tubular member (5), the inner inclined surface (5e) being inclined toward a radially inner side of the tubular member (5) as approaching an edge of the slit (5b) from a circumferential direction of the tubular member (5).

6. The seat (1) according to any one of claims 1 to 5, wherein the linear member (4) has a tapered protruding portion (4a) at a portion of an outer peripheral surface (5d) of the linear member (4), the portion being separated from the hanging portion (3a).

7. The seat (1) according to any one of claims 1 to 6, wherein the linear member (4) has an engaging protrusion (4b) on an outer peripheral surface (5d) of the linear member (4), the engaging protrusion (4b) being engageable with the inner peripheral surface of the tubular member (5).

8. The seat (1) according to any one of claims 1 to 7, further comprising:
in a configuration in which a plurality of the hanging portions (3a) are respectively hung in a plurality of the grooves (2b),
a hook-and-loop fastener (7) that detachably holds some of the plurality of hanging portions (3a) in the grooves (2b).

## Patentansprüche

1. Sitz (1), umfassend:
ein Polster (2) mit mindestens einer Vertiefung (2b), die in einer gegenüberliegenden, einer sitzenden Person zugewandten, Fläche ausgebildet ist;
einen Überzug (3), der mindestens einen herunterhängenden Abschnitt (3a) aufweist, der sich entlang der Vertiefung (2b) erstreckt und im Innern der Vertiefung (2b) aufgehängt ist und die gegenüberliegende Fläche des Polsters (2) bedeckt;
mindestens ein geradliniges Element (4), das sich entlang einer Längsrichtung des herunterhängenden Abschnitts (3a) erstreckt und an einer Schlusskante (3b) des herunterhängenden Abschnitts (3a) vorgesehen ist; und
mindestens ein elastisch verformbares, rohrförmiges Element (5), das im Innern der Vertiefung (2b) des Polsters (2) vorgesehen ist, sodass es sich längs der Vertiefung (2b) erstreckt,
wobei ein Schlitz (5b) auf einer äußeren Umfangsfläche (5d) des rohrförmigen Elements (5) ausgebildet ist, der Schlitz (5b) sich in einer Längsrichtung des rohrförmigen Elements (5) mit einer Weite erstreckt, die enger ist als ein Außendurchmesser des geradlinigen Elements (4),
**dadurch gekennzeichnet, dass**
der Schlitz (5b) es ermöglicht, die Weite durch elastische Verformung des rohrförmigen Elements (5) zu dehnen, und
das geradlinige Element (4) von dem Schlitz (5b) auf der äußeren Umfangsfläche (5d) des rohrförmigen Elements (5) aus eingesetzt wird, und das am herunterhängenden Abschnitt (3a) des Überzugs (3) vorgesehene geradlinige Element (4) im Innern der Vertiefung (2b) des Polsters (2) in einem Zustand zurückgehalten wird, wo der herunterhängende Abschnitt (3a) in den Schlitz (5b) des rohrförmigen Elements (5) eingesetzt ist.

2. Sitz (1) nach Anspruch 1, wobei an einem Ende des rohrförmigen Elements (5) eine Einsetzöffnung (5c) ausgebildet ist, in die das geradlinige Element (4) einsetzbar ist.

3. Sitz (1) nach Anspruch 2, wobei ein Innendurchmesser der Einsetzöffnung (5c) weiter eingestellt ist als ein Innendurchmesser des anderen Abschnitts des rohrförmigen Elements (5).

4. Sitz (1) nach einem der Ansprüche 1 bis 3, wobei das rohrförmige Element (5) eine äußere geneigte Fläche auf der äußeren Umfangsfläche (5d) des rohrförmigen Elements (5) aufweist, die äußere geneigte Fläche zu einer radial inneren Seite des rohrförmigen Elements (5) geneigt ist, indem sie sich von einer Umfangsrichtung des rohrförmigen Elements einer Kante des Schlitzes (5b) annähert.

5. Sitz (1) nach einem der Ansprüche 1 bis 4, wobei das rohrförmige Element (5) eine innere geneigte Fläche (5e) auf einer inneren Umfangsfläche des rohrförmigen Elements (5) aufweist, die innere geneigte Fläche (5e) zu einer radial inneren Seite des rohrförmigen Elements (5) geneigt ist, indem sie sich von einer Umfangsrichtung des rohrförmigen Elements (5) einer Kante des Schlitzes (5b) annähert.

6. Sitz (1) nach einem der Ansprüche 1 bis 5, wobei das geradlinige Element (4) einen zugespitzten, vorstehenden Abschnitt (4a) an einem Teil einer äußeren Umfangsfläche (5d) des geradlinigen Elements (4) aufweist, wobei der Abschnitt von dem herunterhängenden Abschnitt (3a) getrennt ist.

7. Sitz (1) nach einem der Ansprüche 1 bis 6, wobei das geradlinige Element (4) einen eingreifenden Vorsprung (4b) auf einer äußeren Umfangsfläche (5d) des geradlinigen Elements (4) aufweist, der eingreifende Vorsprung (4b) mit der inneren Umfangsfläche des rohrförmigen Elements (5) in Eingriff bringbar ist.

8. Sitz (1) nach einem der Ansprüche 1 bis 7, des Weiteren umfassend:
in einer Ausgestaltung, bei der eine Vielzahl der herunterhängenden Abschnitte (3a) jeweils in einer Vielzahl der Vertiefungen (2b) aufgehängt sind,
einen Klettverschluss (7), der ablösbar einige der Vielzahl von herunterhängenden Abschnitten (3a) in den Vertiefungen (2b) festhält.

## Revendications

1. Siège (1) comprenant :
un coussin (2) ayant au moins une rainure (2b) formée dans une surface opposée faisant face à une personne assise ;
un revêtement (3) qui comporte au moins une partie suspendue (3a), s'étendant le long de la rainure (2b) et accrochée à l'intérieur de la rainure (2b), et qui recouvre la surface opposée du coussin (2) ;
au moins un élément linéaire (4) s'étendant le long d'une direction longitudinale de la partie suspendue (3a) et disposé au niveau d'un bord d'extrémité (3b) de la partie suspendue (3a) ; et
au moins un élément tubulaire (5) élastiquement déformable prévu à l'intérieur de la rainure (2b) du coussin de manière à s'étendre le long de la rainure (2b),
dans lequel une fente (5b) est formée sur une surface périphérique extérieure (5d) de l'élément tubulaire (5), la fente (5b) s'étendant dans une direction longitudinale de l'élément tubulaire (5), ayant une largeur plus étroite qu'un diamètre extérieur de l'élément linéaire (4),
**caractérisé en ce que**
la fente (5b) permet d'élargir la largeur par déformation élastique de l'élément tubulaire (5), et
l'élément linéaire (4) est inséré à partir de la fente (5b) sur la surface périphérique extérieure (5d) de l'élément tubulaire (5), et l'élément linéaire (4) prévu au niveau de la partie suspendue (3a) du revêtement (3) est retenu à l'intérieur de la rainure (2b) du coussin (2) dans un état dans lequel la partie suspendue (3a) est insérée dans la fente (5b) de l'élément tubulaire (5).

2. Siège (1) selon la revendication 1,
dans lequel un orifice d'insertion (5c), dans lequel l'élément linéaire (4) peut être inséré, est formé à une extrémité de l'élément tubulaire (5).

3. Siège (1) selon la revendication 2,
dans lequel un diamètre intérieur de l'orifice d'insertion (5c) est adapté de manière à être plus large qu'un diamètre intérieur de l'autre partie de l'élément tubulaire (5).

4. Siège (1) selon l'une des revendications 1 à 3,
dans lequel l'élément tubulaire (5) présente une surface inclinée extérieure sur la surface périphérique extérieure (5d) de l'élément tubulaire (5), la surface inclinée extérieure étant inclinée vers un côté radialement intérieur de l'élément tubulaire (5) en se rapprochant d'un bord de la fente (5b) depuis une direction circonférentielle de l'élément tubulaire.

5. Siège (1) selon l'une des revendications 1 à 4,
dans lequel l'élément tubulaire (5) présente une surface inclinée intérieure (5e) sur une surface périphérique intérieure de l'élément tubulaire (5), la surface inclinée intérieure (5e) étant inclinée vers un côté radialement intérieur de l'élément tubulaire (5) en se rapprochant d'un bord de la fente (5b) depuis une direction circonférentielle de l'élément tubulaire (5).

6. Siège (1) selon l'une des revendications 1 à 5,
dans lequel l'élément linéaire (4) présente une partie saillante effilée (4a) au niveau d'une partie d'une surface périphérique extérieure (5d) de l'élément linéaire (4), ladite partie étant séparée de la partie suspendue (3a).

7. Siège (1) selon l'une des revendications 1 à 6,
dans lequel l'élément linéaire (4) présente une saillie d'engagement (4b) sur une surface périphérique extérieure (5d) de l'élément linéaire (4), la saillie d'engagement (4b) pouvant s'engager avec la surface périphérique intérieure de l'élément tubulaire (5).

8. Siège (1) selon l'une des revendications 1 à 7, comprenant en outre :
dans une configuration dans laquelle une pluralité de parties suspendues (3a) sont respectivement accrochées dans une pluralité de rainures (2b),
une fermeture auto-agrippante (7) qui maintient de manière amovible certaines de la pluralité de parties suspendues (3a) dans les rainures (2b).
